Europäisches Patentamt

European Patent Office

Office européen des brevets

(11) Publication number: **0 433 495 A1**

# (12) EUROPEAN PATENT APPLICATION

(21) Application number: 89203213.7

(51) Int. Cl.5: **B60R 9/052**

(22) Date of filing: **15.12.89**

(43) Date of publication of application:
26.06.91 Bulletin 91/26

(84) Designated Contracting States:
AT BE CH DE ES FR GB LI NL SE

(71) Applicant: **MADIGE S.R.L.**
**Via Fossano 9**
**I-12040 Salmour (Cuneo)(IT)**

(72) Inventor: **Gemesio, Diego**
**Via Fossano 9**
**I-12040 Salmour (Cuneo)(IT)**

(74) Representative: **Robba, Eugenio et al**
**Studio "INTERPATENT" via Caboto 35**
**I-10129 Turin(IT)**

(54) Adjustable bar for luggage racks, ski racks, anything carrying racks and the like.

(57) The bar is constituted by two fixed (side) elements (1, 3) and a movable (central) element (5) mounted telescopically relative thereto.

Said movable element (5) carries at at least one of its ends an inner plate (11) firmly secured thereto, drilled and threaded at (13); at least one fixed element (3) carries a fixing plate (25) drilled at (27), through which a fixing pin (29) passes and is inserted in a threaded hole (13) of the plate (11) of the element (5); provided on the opposite side is either an analogous system with a plate (11) and counter plate (25) or a system of fixing by means of a transverse bolt (19) fixing the intermediate element (5) to the fixed element (1).

The bar thus mounted is supported on the roof of the motor-car by appropriate feet (7) resting on supports (9) of scratch-resistant plastic material; fixing to the motor-car is ensured by conventional anchoring brackets (33) in turn fixed to the supporting feet (7) of the bar by conventional means.

FIG.1

## ADJUSTABLE BAR FOR LUGGAGE RACKS, SKI RACKS, ANYTHING CARRYING RACKS AND THE LIKE

The present invention relates to a bar of adjustable width for luggage racks, ski racks, anything carrying racks and the like, for motor vehicles.

It is known that at present there are on the market various types of bars for luggage racks and the like, each having its characteristics adapted to meet one or another requirement, so that there is no need of describing them one by one.

The present invention is intended to respond in a different way to the requirements of adaptability of said bar to the width of the motor vehicle to which it is applied and at the same time to provide a simple and practical bar.

The present invention is substantially constituted by two fixed elements and a movable element mounted telescopically relative to said two fixed elements, the first and the second fixed element being substantially alike, having a hollow parallelepiped cross section and being supported on the roof of the motor-car by an appropriate foot through an appropriate plastic base, the movable element likewise being substantially a hollow parallelepiped section adapted to be inserted in said fixed elements, but carrying, secured to one end, an appropriate rectangular fixing plate drilled and threaded inwardly and carrying on the opposite side a transverse fixing hole; a first fixed element carrying, adjacent said hole of the movable element, a corresponding hole adapted for insertion of an appropriate transverse fixing through pin for fixing the movable element to said fixed element; a second fixed element being provided at the end with two inner transverse lugs constituting the seat for a second outer rectangular plate analogous to the one fixed to the movable element and provided with a through hole through which a through bolt of a predetermined length is inserted which with its threaded portion engages the threaded hole of the plate firmly secured to the movable element; the bases of support of the two feet of the fixed elements being made of scratch-resistant plastic material; fixing of the bar to the motor-car being ensured by affixing conventional outer brackets, one on each side, which are coupled to appropriate seats provided on the aforementioned supporting feet and providing the tension required for locking the bar by means of a threaded bolt engaging the appropriate threaded seat of said feet.

It is to be noted that the greater or smaller width given to the present bar is produced by the relative positioning of the movable telescopic element relative to the fixed elements, said positioning being produced by the greater or smaller length of the bolt engaging the plate firmly secured to the movable element and passing, as mentioned above, through the drilled plate placed outwardly of the lugs of the second fixed element.

It is also to be noted that the bolt passing through the outer plate and engaging the inner plate firmly secured to the movable element mounted telescopically inside the two fixed elements is of greater or smaller length depending on the greater or smaller length of the unthreaded portion of the bolt.

According to another substantially equivalent embodiment, the movable element which is mounted telescopically relative to the two fixed elements is provided with two fixing plates, one on each side, instead of only one, firmly secured to both ends of said bar; fixing of said elements to one another (the fixed elements and the movable element) being obtained from both sides in the manner described above for the first embodiment.

According to another embodiment likewise coming substantially within the field of mechanical equivalents, the outer plate provided with the through hole through which passes the fixing bolt engaging the threaded hole of the plate or plates firmly secured to the intermediate element, bears against the outer edge of the section of the bar constituted by the fixed elements, said plate being made of greater thickness than the thickness of the plate recited in the first two embodiments to avoid yielding of the plate under the pulling action of the fixing bolt, the fixed element or elements being no longer provided with lugs as seats for said plate to avoid also in this case yielding thereof as a result of a particularly intense screwing action.

The invention will now be described in detail with particular reference to the accompanying drawings provided by way of a non-limiting example and in which:

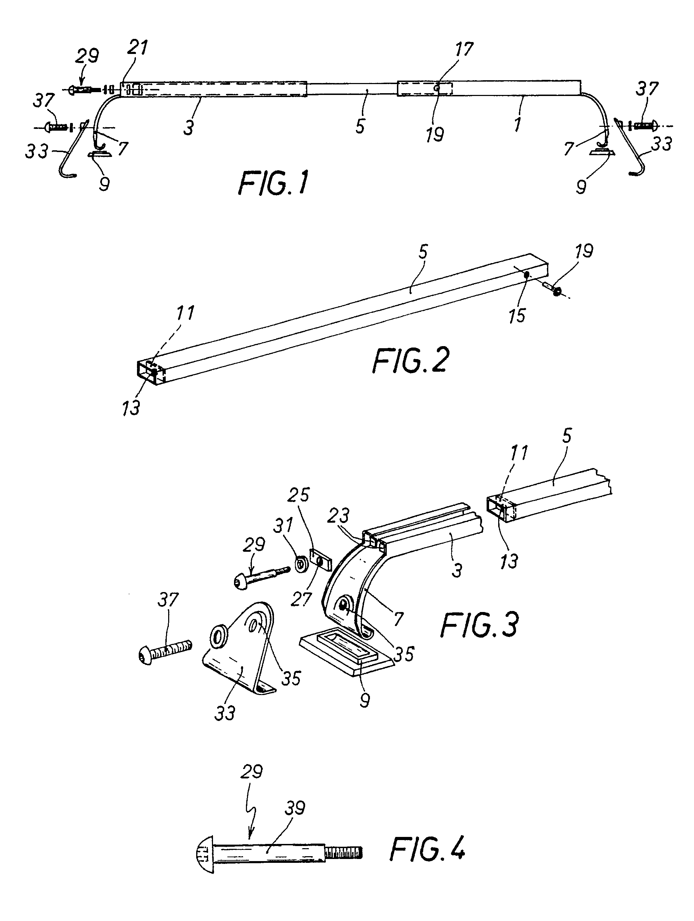

Fig. 1 is a side elevational view of the bar with the elements mounted thereon and the fixing means in an exploded view;

Fig. 2 is a perspective view of the telescopic element, showing the plate firmly secured thereto and the hole and fixing means for fixing to a fixed element;

Fig. 3 is an exploded perspective view showing mounting of the movable element in the fixed element with the associated pulling and positioning plate and the associated bolt, with indication of the fixing of the bracket located outwardly of the foot for supporting the bar;

Fig. 4 is a side elevational view of the through bolt engaging the plate firmly secured to the movable element;

Fig. 5 is a side elevational view of the present bar according to a second embodiment of the invention;

Fig. 6 is a perspective view of the intermediate bar made according to said second embodiment;

Fig. 7 is a partial exploded perspective view of a third embodiment of the invention which is particularly useful when particularly intense pulling actions are to be feared.

As is evident from the Figures, the present bar is substantially constituted by a first fixed element 1, by a second fixed element 3 and a third element 5 which is mounted telescopically relative to the first two elements 1 and 3.

Said first two fixed elements 1 and 3 are substantially alike, have a hollow parallelepiped cross section and are supported on the roof of the motor-car by appropriate feet 7 through an appropriate base 9 of scratch-resistant plastic material.

The movable element 5 is likewise a substantially hollow section having a parallelepiped cross section and adapted to be inserted in the fixed elements 1 and 3, but carrying, fixed at one end thereof, an appropriate rectangular fixing plate 11 which is drilled and inwardly threaded at 13. On the opposite side said movable element 5 has a transverse fixing hole 15 which will be described hereinafter.

The first fixed element 1 likewise has adjacent the hole 15 of the element 5, a transverse through hole 17 adapted for insertion therein of an appropriate fixing pin 19. Said fixing pin 19 engages the threaded hole 15 provided in the element 5 and thus fixes the elements 1 and 5 to each other.

The second fixed element 3, which is completely similar to the element 1, is provided, adjacent the end 21, with two transverse inner lugs 23 constituting the seat for a second outer rectangular plate 25 analogous to the plate 11.

Said second plate 25 is drilled at 27 with a through hole to permit the passage of an appropriate fixing bolt 29 which by passing through the plate 25 at 27 engages the plate 11 at 13, which is firmly secured to the movable element 5.

Said bolt 29 is obviously provided with a washer 31.

The bar thus mounted is ready for fixing on the roof of the motor-car by placing, as mentioned above, the feet 7 on appropriate supports 9 of suitable plastic material and applying to said feet 7 conventional brackets 33 or counter plates fitting said feet at 35 and fixed by the action of appropriate fixing bolts 37.

The fixing bolt 29 is typically constituted by a threaded portion and a cylindrical portion. The greater or smaller length of said cylindrical portion 39 determines the greater or smaller length of the bolt and consequently the greater or smaller width of the bar (distance between the feet 7).

It is evident that in this manner the bar can be adjusted in width as desired by the user, a longer or shorter bolt 37 being adapted to said different width of the bar and thus to different types of motor-cars to which the bar is to be applied.

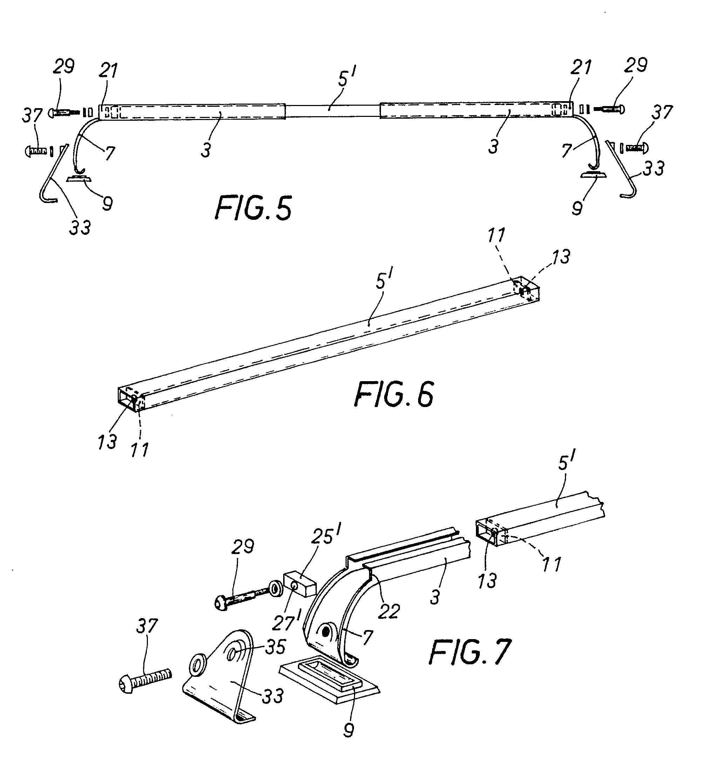

According to the embodiment illustrated in Figs. 5 and 6, the intermediate element 5′ is provided at both ends 21 with a fixing plate 11 firmly secured thereto. The intermediate element 5′ will obviosly be of greater length than the element 5.

Fixing of said intermediate element 5′ to the elements 3 and 3 will obviously be made as in the case described in the first embodiment, i.e. by the introduction of a through bolt 29 which will pass through the outer plates 25 at 27 and engage at 13 the inner plates 11 firmly secured to the intermediate bar 5′.

Obviously said bolts 29 will be provided one on each side.

Provided in Fig. 7 is another embodiment of the invention which, however, refers to a detail of the same and is applicable both to the first embodiment (one plate) and the second embodiment (two plates).

In this solution, which is particularly suitable for a particularly strong fixing strain, or when it is feared that the lugs 23 forming the seats of the pulling plates 25 may yield due to said fixing action, the outer pulling plate or plates 25′ are provided with a greater thickness than the plates 25, are also drilled at 27′, but are supported on the outer edges 22 of the section 3 constituting the fixed bar.

It is obvious that in these elements 3 the lugs 23 forming the seats of said plates 25 are not provided, the seat or seats of said plates 25′ being, as mentioned before, the edge 22 of the section 3 constituting the fixed bar.

It is evident that the invention is not limited to the described and illustrated embodiment and that numerous variations and further improvements may be made therein without thereby departing from the scope of the invention.

**Claims**

1. Adjustable bar for luggage racks, ski racks, anything carrying racks and the like, characterized in that it is substantially constituted by two fixed elements (1) (3) and a movable element (5) mounted telescopically relative to said two fixed elements, the first (1) and the second (3) fixed element being substantially alike, having a hollow parallelepiped cross section and being supported on the roof of the motor-car by an appropriate foot through an appropriate plastic base (9), the movable element (5) likewise being substantially a hollow parallelepiped section adapted to be inserted in said fixed elements (1) (3), but carrying, secured to one end, an appropriate rectangular fixing plate (11) drilled and threaded inwardly and carrying on the opposite side a transverse fixing hole (15), a first fixed element (1) carrying, adjacent said hole (15) of the movable element (5), a corresponding hole (17) adapted for insertion of an appropriate transverse fixing through pin (19) for fixing the movable element (5) to said fixed element (1), a second fixed element (3) being provided at the end (21) with two inner transverse lugs (23) constituting the seat for a second outer rectangular plate (25) analogous to the one fixed to the movable element (5) and provided with a through hole (27) through which a through bolt (29) of a predetermined length is inserted which with its threaded portion engages the threaded hole (13) of the plate (11) firmly secured to the movable element (5), the bases of support (9) of the two feet (7) of the fixed elements being made of scratch-resistant plastic material, fixing of the bar to the motor-car being ensured by affixing conventional outer brackets (33), one on each side, which are coupled to appropriate seats (35) provided on the aforementioned supporting feet (7) and providing the tension required for locking the bar by means of a threaded bolt (37) engaging the appropriate threaded seat of said feet (7).

2. adjustable bar for luggage racks, ski racks, anything carrying racks and the like, according to claim 1, characterized in that the greater or smaller width given to the present bar is determined by the relative positioning of the movable element (5) mounted telescopically relative to the fixed elements (1) (3), said positioning being determined by the greater or smaller length of the bolt (29) engaging the plate (11) firmly secured to the movable element (5) and passing, as mentioned above, through the drilled plate (25) placed outwardly of the lugs (23) of the second fixed element (3).

3. Adjustable bar for luggage racks, ski racks, anything carrying racks and the like, according to the preceding claims, characterized in that the bolt (29) passing through the outer plate (25) and engaging the inner plate (11) firmly secured to the movable element (5) mounted telescopically inwardly of the two fixed elements (1) (3), is of greater or smaller length depending on the greater or smaller length of the unthreaded portion (39) of the bolt.

4. Adjustable bar for luggage racks, ski racks, anything carrying racks and the like, according to a variation of the first embodiment, characterized in that the movable element (5′) mounted telescopically relative to the two fixed elements (3) (3) is provided with two fixing plates (11), one on each side, instead of only one, firmly secured to both ends of said bar (5′), fixing of said elements to one another (the fixed elements (3) and the movable element (5′)) being effected from both sides in the manner described above for the first embodiment.

5. Adjustable bar for luggage racks, ski racks, anything carrying racks and the like, according to another embodiment of the invention applicable both to the first and the second embodiment, characterized in that the outer plate (25′) provided with a through hole (27′), through which passes the fixing bolt (29) engaging the threaded hole (13) of the plate or plates (11) firmly secured to the intermediate element (5) or (5′), bears against the outer edge (22) of the bar section constituting the fixed elements (3) (3), said plate (25′) being provided with a greater thickness than the thickness of the plate recited in the first two embodiments to avoid yielding thereof (25) under the action of the pull of the fixing bolt (29), the fixed element or elements (3) being no longer provided with lugs (23) serving as seats for said plate (25) to avoid also in this case yielding of the same as a result of a particularly strong screwing action.

FIG.1

FIG.2

FIG.3

FIG.4

FIG.5

FIG.6

FIG.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0205414 (KAMI)<br>* column 4, lines 29 - 48 * | 4 | B60R9/052 |
| Y | | 1, 5 | |
| Y | EP-A-0092530 (THULE)<br>* page 5, lines 39 - 41; figure 1 * | 1 | |
| Y | FR-A-1211727 (FONTAINE)<br>* page 1, lines 43 - 58 * | 1 | |
| A | | 4 | |
| Y | DE-A-3011641 (HILLER)<br>* page 12, lines 11 - 20 * | 5 | |
| A | US-A-4354625 (PEOPLES)<br>* column 3, line 60 - column 4, line 18 * | 1 | |

TECHNICAL FIELDS
SEARCHED (Int. Cl.5 )

B60R

The present search report has been drawn up for all claims

| Place of search | Date of completion of the search | Examiner |
|---|---|---|
| BERLIN | 03 AUGUST 1990 | STANDRING, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)